# EUROPEAN PATENT APPLICATION

(11) **EP 4 822 887 A1**
(43) Date of publication of application: **14.10.2026**
(21) Application number: 24921270.5
(22) Date of filing: 07.06.2024
(51) Int. Cl.: H01M 50/593, H01M 10/04, H01M 50/586, H01M 10/42

(54) **ELECTRODE ASSEMBLY AND MANUFACTURING METHOD THEREFOR, BATTERY CELL, BATTERY, AND ELECTRICAL DEVICE**

(30) Priority: 04.02.2024 CN 202410160635
(71) Applicant: Contemporary Amperex Technology Co., Limited, Ningde, Fujian 352100 (CN)
(72) Inventor: WU, Xiang, Ningde, Fujian 352100 (CN); ZHANG, Xiaowei, Ningde, Fujian 352100 (CN); WEN, Yuqian, Ningde, Fujian 352100 (CN)
(74) Representative: Lorenz Seidler Gossel Part. mbB
(86) International application number: PCT/CN2024/097909
(87) International publication number: WO 2025/161233

(57) **Abstract**

An electrode assembly (30) and a manufacturing method therefor, a battery cell (7), a battery, and an electrical device, said electrode assembly (30) comprising a first electrode plate (301) and a second electrode plate (302) that have opposite polarities, as well as a first insulator (303). The first electrode plate (301) and the second electrode plate (302) are wound in a winding direction. The first electrode plate (301) comprises a first current collector (3011) and a first active material layer (3012) arranged on a surface of the first current collector (3011). An end portion of the first current collector (3011) in the winding direction is provided with a first end face (30111). The first insulator (303) is connected to the first electrode plate (301) and covers at least part of the first end face (30111). In the described structure, the first end face (30111) provided at the end portion of the first current collector (3011) is covered with the first insulator (303), and the first insulator (303) can wrap up burrs on the first end face (30111). Thus, the risk of burrs piercing a separator (305) of the electrode assembly (30) is reduced, the possibility of short circuiting occurring inside of the battery is reduced, and improvement to the reliability of the battery is facilitated.

## Description

### CROSS-REFERENCE TO RELATED APPLICATIONS

The present application claims priority to Chinese Patent Application No. 202410160635.1, filed on February 04, 2024 and entitled "ELECTRODE ASSEMBLY AND MANUFACTURING METHOD THEREFOR, BATTERY CELL, BATTERY, AND ELECTRICAL DEVICE", which is incorporated herein by reference in its entirety.

### TECHNICAL FIELD

The present application relates to the technical field of batteries, and in particular, to an electrode assembly and a manufacturing method therefor, a battery cell, a battery, and an electrical device.

### BACKGROUND

A battery has advantages such as high specific energy and high power density, and is widely used in an electronic device and a transportation vehicle, such as mobile phones, notebook computers, electric bicycles, electric vehicles, electric airplanes, electric ships, and electric tools.

With the continuous expansion of an application range of the battery, the battery is required for higher and higher reliability. How to improve reliability of the battery has attracted more and more attention of a person skilled in the art.

### SUMMARY

In view of the above problem, the present application provides an electrode assembly and a manufacturing method therefor, a battery cell, a battery, and an electrical device. The electrode assembly is beneficial for improving the reliability of the battery.

In a first aspect, the present application provides an electrode assembly. The electrode assembly includes a first electrode plate and a second electrode plate that have opposite polarities. The first electrode plate and the second electrode plate are wound in a winding direction. The first electrode plate includes a first current collector and a first active material layer arranged on a surface of the first current collector. An end portion of the first current collector in the winding direction is provided with a first end face. The electrode assembly further includes a first insulator. The first insulator is connected to the first electrode plate and covers at least part of the first end face. In the described structure, the first end face provided at the end portion of the first current collector is covered with the first insulator, and the first insulator can wrap up burrs on the first end face. Thus, the risk of burrs piercing a separator of the electrode assembly is reduced, the possibility of short circuiting occurring inside the battery is reduced, and improvement to the reliability of the battery is facilitated.

According to the electrode assembly provided by some embodiments of the present application, both ends of the first electrode plate in the winding direction are provided with the first insulator, so that the burrs on the first end faces of both ends of the first electrode plate can be covered. Thus, the risk of the burrs piercing the separator of the electrode assembly can be further reduced, and further improvement to the reliability of the battery is facilitated.

According to the electrode assembly provided by some embodiments of the present application, the first insulator is bonded to the first active material layer or the first current collector, so that the first insulator is firmly connected to the first electrode plate and is not easy to fall off.

According to the electrode assembly provided by some embodiments of the present application, the first insulator includes two first insulating layers arranged opposite to each other, the first insulating layer includes a first connecting portion and a first covering portion, the first covering portion is stacked on the first electrode plate, and the first connecting portions of the two first insulating layers are bonded to each other, thereby implementing the covering of the first end face connected between the two opposite surfaces of the first electrode plate.

According to the electrode assembly provided by some embodiments of the present application, a thickness of the first electrode plate is H1, a thickness of the first insulating layer is H2, where $H 2 \leq \frac{1}{2} H 1$, facilitating reduction in occurrence of steps in the electrode assembly formed by winding and the possibility of cracks in the first electrode plate due to step stress.

According to the electrode assembly provided by some embodiments of the present application, an inner end of the first electrode plate is connected to the first insulator, and at least a part of the first electrode plate is wound on an outer side of the first insulator, so that the first insulator at the inner end of the first electrode plate can be wound at a center of the electrode assembly, and the first insulator can support the electrode assembly, facilitating reduction in possibility of collapse of the electrode assembly.

According to the electrode assembly provided by some embodiments of the present application, in a direction opposite to the winding direction, a length of the first insulator at the inner end of the first electrode plate extending beyond the first electrode plate is A1, where 0.5 mm≤A1≤120 mm.

According to the electrode assembly provided by some embodiments of the present application, the second electrode plate comprises a second current collector and a second active material layer disposed on a surface of the second current collector. An end portion of the second current collector in the winding direction has a second end face. The electrode assembly further comprises a second insulator. The second insulator is connected to the second electrode plate and covers at least a part of the second end face, so that burrs of a portion of the second end face covered by the second insulator are covered by the second insulator, thereby reducing the possibility that the burrs pierce a separator, and reducing the risk of short circuiting of a battery cell.

According to the electrode assembly provided by some embodiments of the present application, an elastic modulus of the first insulator is greater than an elastic modulus of the first electrode plate, and an elastic modulus of the second insulator is greater than an elastic modulus of the second electrode plate, so that the first insulator connected to the inner end of the first electrode plate can better perform support at the center of the electrode assembly, and the second insulator connected to the inner end of the second electrode plate can better perform support at the center of the electrode assembly, facilitating reduction in the possibility of collapse of the electrode assembly.

According to the electrode assembly provided by some embodiments of the present application, the first electrode plate is an anode electrode plate, the second electrode plate is a cathode electrode plate, and in an opposite direction of the winding direction, the first insulator extends beyond the second insulator, so that the first insulator connected to the positive electrode plate can be longer than the second insulator at the center of the electrode assembly and can be wound into the center of the electrode assembly.

According to the electrode assembly provided by some embodiments of the present application, in a thickness direction of the first electrode plate, a thickness of the first insulator is H3, and a thickness of the second insulator is F3, where H3>F3, so that the first insulator wound on the inner end of the first electrode plate in the center of the electrode assembly can provide a larger supporting force, facilitating improvement to the effect of reducing collapse.

According to the electrode assembly provided by some embodiments of the present application, in the direction opposite to the winding direction, the first insulator is located at the inner side of the second insulator, so that the first insulator is entirely located on an inner side of the second insulator, which not only enables an anode electrode plate to protrude from a cathode electrode plate in the winding direction, but also enables the first insulator connected to the inner end of the first electrode plate to be better wound around the center of the electrode assembly to better play a support effect.

According to the electrode assembly provided by some embodiments of the present application, an elastic modulus of the first insulator is greater than an elastic modulus of the second insulator, so that the first insulator connected to the inner end of the first electrode plate can provide a greater elastic restoring force to support the center of the electrode assembly after winding, and the first insulator can better reduce the possibility of collapse of the electrode assembly.

According to the electrode assembly provided by some embodiments of the present application, both ends of the second electrode plate in the winding direction are provided with the second insulator, so that the burrs on the second end faces of both ends of the second electrode plate can be covered. Thus, the risk of the burrs piercing the separator of the electrode assembly can be further reduced, and further improvement to the reliability of the battery is facilitated.

According to the electrode assembly provided by some embodiments of the present application, a length of the second insulator at the inner end of the second electrode plate extending beyond the second electrode plate is B1, and a length of the second insulator at the outer end of the second electrode plate extending beyond the second electrode plate is B4, where B1>B4, so that the second insulator can have a good support effect while reducing waste.

According to the electrode assembly provided by some embodiments of the present application, the electrode assembly is a cylindrical structure.

According to the electrode assembly provided by some embodiments of the present application, the first electrode plate further includes a first tab connected to the first current collector. The first tab includes a flattened region. The flattened region and the first insulator are spaced apart, so that the flattened region and the first insulator are in a separated state, and the first insulator does not affect connection between the flattened region and a current collecting disc.

In a second aspect, the present application provides a battery cell including a housing and at least one of the electrode assemblies provided by any of the foregoing technical solutions. The battery cell is accommodated in the housing.

In a third aspect, the present application provides a battery. The battery includes the battery cell provided by the foregoing technical solutions.

In a fourth aspect, the present application provides an electrical device. The electrical device includes the battery provided by the foregoing technical solutions. The battery is used to provide electric energy.

In a fifth aspect, the present application provides a method for manufacturing an electrode assembly, including the following steps:
providing a plurality of first electrode plates and an insulator, where the first electrode plate includes a first current collector and a first active material layer arranged on a surface of the first current collector, and an end portion of the first current collector in a length direction of the first current collector is provided with a first end face;
connecting two adjacent first electrode plates through the insulator, where the insulator covers at least a part of the first end face;
winding the first electrode plate and the insulator in the length direction of the first current collector; and
cutting the insulator between the two adjacent first electrode plates to enable two ends of the first electrode plate in a winding direction to form a first insulator, where the first insulator covers at least a part of the first end face.

The technical solutions provided in the embodiments of the present disclosure have at least the following beneficial effects:
The present application provides an electrode assembly. The electrode assembly includes a first electrode plate and a second electrode plate that have opposite polarities, and a first insulator. The first electrode plate and the second electrode plate are wound in a winding direction. The first electrode plate includes a first current collector and a first active material layer arranged on a surface of the first current collector. An end portion of the first current collector in the winding direction is provided with a first end face. The first insulator is connected to the first electrode plate and covers at least part of the first end face. In the described structure, the first end face provided at the end portion of the first current collector is covered with the first insulator, and the first insulator can wrap up burrs on the first end face. Thus, the risk of burrs piercing a separator of the electrode assembly is reduced, the possibility of short circuiting occurring inside of the battery is reduced, and improvement to the reliability of the battery is facilitated.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, throughout the drawings, identical reference numerals are used to designate identical components.
FIG. 1 is a schematic structural diagram of a vehicle according to some embodiments of the present application;
FIG. 2 is an exploded view of a battery according to some embodiments of the present application;
FIG. 3 is an exploded view of a battery module according to some embodiments of the present application;
FIG. 4 is a sectional view of a battery cell according to some embodiments of the present application;
FIG. 5 is a sectional view of an electrode assembly in a battery cell according to some embodiments of the present application;
FIG. 6 is a sectional view of a first electrode plate according to some embodiments of the present application;
FIG. 7 is a sectional view after connection of a first insulator and a first electrode plate provided by some embodiments of the present application after unfolding;
FIG. 8 is a sectional view of a second electrode plate according to some embodiments of the present application;
FIG. 9 is a sectional view after connection of a second insulator and a second electrode plate provided by some embodiments of the present application after unfolding;
FIG. 10 is a top view of a first end face of a first electrode plate according to some embodiments of the present application; and
FIG. 11 is a top view of a first end face of a first electrode plate according to some other embodiments of the present application.

In the accompanying drawings:
1: vehicle; 2: battery; 3: controller; 4: motor; 5: box; 5a: first box portion; 5b: second box portion; 5c: accommodation space; 6: battery module; 7: battery cell; 20: housing; 30: electrode assembly; 301: first electrode plate; 3011: first current collector; 30111: first end face; 3012: first active material layer; 3013: first tab; 30131: flattened region; 302: second electrode plate; 3021: second current collector; 30211: second end face; 3022: second active material layer; 303: first insulator; 3031: first insulating layer; 30311: first connecting portion; 30312: first covering portion; 304: second insulator; 3041: second insulating layer; 30411: second connecting portion; 30412: second covering portion; 305: separator; X: winding direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

It should be noted that, unless otherwise specified, the technical terms or scientific terms used in the embodiments of the present application shall have the ordinary meanings as understood by a person of ordinary skill in the art to which the embodiments of the present application pertain.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In addition, the technical terms "first", "second" and the like are only used for descriptive purposes, and should not be construed as indicating or implying relative importance or implicitly indicating the number of technical features indicated. In the description of the embodiments of the present application, "a plurality of" means two or more (including two) unless specifically defined otherwise.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles.

A battery mentioned in the embodiments of the present application refers to a single physical module including one or a plurality of battery cells to provide a higher voltage and capacity.

In the embodiments of the present application, the battery cell may be a secondary battery, which refers to a battery cell that may be continuously used by activating an active material by means of charging the battery cell after discharging thereof.

The battery cell may include, but is not limited to, a lithium ion battery cell, a sodium ion battery cell, a sodium-lithium ion battery cell, a lithium metal battery cell, a sodium metal battery cell, a lithium-sulfur battery cell, a magnesium ion battery cell, a nickel-hydrogen battery cell, a nickel-cadmium battery cell, a lead-acid battery cell, or the like.

As an example, the battery cell may be a cylindrical battery cell, a prismatic battery cell, or a battery cell in another shape, and the prismatic battery cell includes a square-housing battery cell, a blade-shaped battery cell, and a polygon prism battery cell, for example, a hexagonal prism battery cell and the like.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box body may be a part of a chassis structure of a vehicle. For example, a part of the box body may be at least a part of a floor of a vehicle, or a part of the box body may be at least a part of a cross beam and a side beam of a vehicle.

In some embodiments, the battery may be an energy storage device. The energy storage device includes an energy storage container, an energy storage cabinet, and the like.

The battery cell generally includes an electrode assembly and a housing. The electrode assembly is accommodated in the housing. The electrode assembly includes a negative electrode, a positive electrode, and a separator. During charging and discharging of the battery cell, intercalation/de-intercalation of active ions (e.g., lithium ions) are enabled at a cathode and an anode by moving the active ions between the positive electrode and negative electrode. The separator is arranged between the cathode and the anode, which can reduce the risk of a short circuit between the cathode and the anode, and at the same time, can allow active ions to pass through.

The housing is used to enclose components such as the electrode assembly and the electrolyte. The housing may be a steel casing, an aluminum casing, a plastic casing (e.g., polypropylene), a composite metal casing (e.g., a copper-aluminum composite casing), an aluminum plastic film, or the like.

In some embodiments, the cathode may be a cathode plate which may include a cathode current collector and a cathode active material layer arranged on at least one surface of the cathode current collector. The anode may be an anode plate which may include an anode current collector and an anode active material layer arranged on at least one surface of the anode current collector.

In the preparation process of an electrode plate (a negative electrode plate or a positive electrode plate), cutting is generally needed (for example, an electrode plate slitting process or a tab cutting process) to form a desired size and shape. However, after cutting, a current collector is prone to having burrs at the cutting position. During charging and discharging of a battery cell, the burrs may pierce the separator to conduct the cathode and the anode, causing a short circuit risk and affecting the reliability of the battery cell.

In view of this, the embodiments of this application provide a technical solution in which an insulator is arranged on an electrode plate to cover an end face of a current collector that is prone to having burrs, thereby reducing the risk that the burrs conduct a cathode and an anode, and improving the reliability of a battery cell.

The electrode assembly described in the embodiments of the present application is applicable to a battery cell, a battery, and an electrical device using the battery.

The battery disclosed in the embodiments of the present application can be used in an electrical device using a battery as a power supply or various energy storage systems using a battery as an energy storage component. The electrical device can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electrical device is a vehicle.

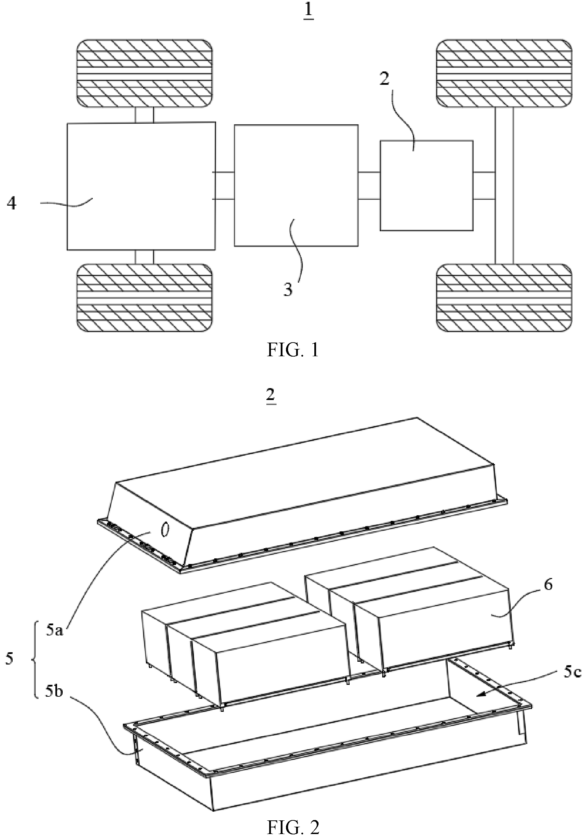

FIG. 1 is a schematic structural diagram of a vehicle 1 according to some embodiments of the present application.

As shown in FIG. 1, inside the vehicle 1, a battery 2 is provided, which may be provided at the bottom, head, or tail of the vehicle 1. The battery 2 may be configured to power the vehicle 1. For example, the battery 2 may be used as an operating power source of the vehicle 1.

The vehicle 1 may further include a controller 3 and a motor 4, where the controller 3 is configured to control the battery 2 to power the motor 4, for example, for a working power requirement of the vehicle 1 during starting, navigating, and driving.

In some embodiments of the present application, the battery 2 may be used not only as an operating power source for the vehicle 1, but also as a driving power source for the vehicle 1, instead of or partially instead of fuel or natural gas to provide driving power for the vehicle 1.

FIG. 2 is an exploded schematic view of a battery 2 according to some embodiments of the present application. As shown in FIG. 2, the battery 2 includes a box 5 and a battery cell (not shown). The battery cell is accommodated in the box 5. The battery cell may be a minimum unit constituting the battery 2.

The box 5 is used to accommodate the battery cell, and the box 5 may have various structures. In some embodiments, the box 5 may include a first box portion 5a and a second box portion 5b, the first box portion 5a and the second box portion 5b cover each other, and the first box portion 5a and the second box portion 5b jointly define the accommodation space 5c for accommodating a battery cell. The second box portion 5b may be a hollow structure with an opening at an end. The first box portion 5a is a plate-shaped structure. The first box portion 5a covers an opening side of the second box portion 5b to form the box 5 having the accommodation space 5c. The first box portion 5a and the second box portion 5b may each be hollow structures with an opening at one side. The opening side of the first box portion 5a covers the opening side of the second box portion 5b to form a box 5 having the accommodation space 5c. Certainly, the first box portion 5a and second box portion 5b may be in various shapes such as cylinder, rectangular cuboid, etc.

To increase sealing performance after the first box portion 5a and the second box portion 5b are connected, a sealing member, for example, a sealant or a sealing ring or the like may be provided between the first box portion 5a and the second box portion 5b.

Assuming that the first box portion 5a covers the top of the second box portion 5b, the first box portion 5a may also be referred to as an upper box cover, and the second box portion 5b may also be referred to as a lower box 5.

In the battery 2, one or more battery cells may be provided. If a plurality of battery cells are provided, the plurality of battery cells may be subjected to series connection, parallel connection, or series-parallel connection, and the series-parallel connection means that the plurality of battery cells are subjected to both series connection, and parallel connection. A plurality of battery cells may be directly connected in series, in parallel, or in a combination of both, and the whole of the plurality of battery cells is accommodated in the box 5. Certainly, the plurality of battery cells may be subjected to series connection, or parallel connection, or series-parallel connection to form a battery module 6, and a plurality of battery modules 6 are integrated by series connection, parallel connection, or series-parallel connection, and accommodated in the box 5.

The plurality of battery cells may be directly arranged in the box 5 to form a battery 10. Alternatively, the plurality of battery cells may first be assembled into a battery module 6, and a plurality of battery modules 6 then are arranged in the box 5 to form the battery 10.

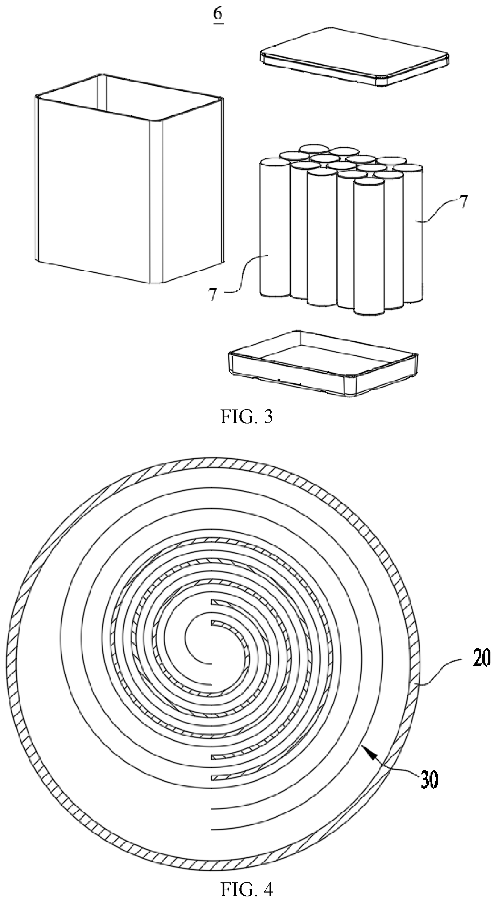

FIG. 3 is an exploded schematic view of a battery module 6 according to some embodiments of the present application.

As shown in FIG. 3, in some embodiments, a plurality of battery cells 7 are provided. The plurality of battery cells 7 are first subjected to series connection, parallel connection, or series-parallel connection to form the battery module 6. A plurality of battery modules 6 are subjected to series connection, parallel connection, or series-parallel connection to form a combined battery module 6, which is accommodated in the box 5.

The plurality of battery cells 7 in the battery module 6 may be electrically connected by a current convergence component to implement parallel connection, series connection, or series-parallel connection of the plurality of battery cells 7 in the battery module 6.

The battery cell 7 may be a cylindrical battery cell 7, a square battery cell 7, or a battery cell 7 of other shapes.

As shown in FIG. 4, in some embodiments, the battery cell 7 includes a housing 20 and an electrode assembly 30. The electrode assembly 30 is accommodated in the housing 20. The electrode assembly 30 is of a cylindrical winding structure.

The housing 20 may be in various shapes and various dimensions, such as a cuboid, a cylinder, a hexagonal prism, and the like. Specifically, the shape of the housing 20 may be determined according to a specific shape and dimension of the electrode assembly 30. The housing 20 may be made of various materials, for example, copper, iron, aluminum, stainless steel, an aluminum alloy, etc.

The electrode assembly 30 is a component in the battery cell 7 in which an electrochemical reaction occurs. The housing 20 may include one or more electrode assemblies 30.

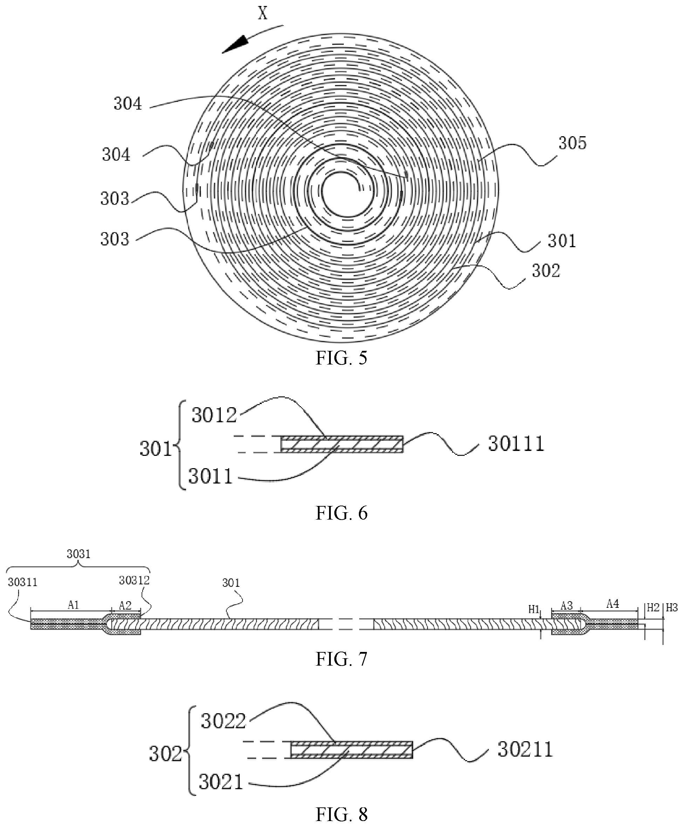

Some embodiments of the present application provide an electrode assembly 30. As shown in FIG. 5, the electrode assembly 30 includes a first electrode plate 301 and a second electrode plate 302 that have opposite polarities. The first electrode plate 301 and the second electrode plate 302 are wound in a winding direction X. As shown in FIG. 6, the first electrode plate 301 includes a first current collector 3011 and a first active material layer 3012 arranged on a surface of the first current collector 3011. An end portion of the first current collector 3011 in the winding direction X has a first end face 30111. The electrode assembly 30 further includes a first insulator 303. The first insulator 303 is connected to the first electrode plate 301 and covers at least a part of the first end face 30111.

The first electrode plate 301 and the second electrode plate 302 are two electrode plates that have opposite electrode properties, where one is an anode electrode plate, and the other is a cathode electrode plate. The first electrode plate 301 and the second electrode plate 302 are wound in the winding direction X, so that the electrode assembly 30 is a winding structure.

The first current collector 3011 may be a structure having conductivity, which may be formed by arranging a conductive material on an insulating substrate. For example, the conductive material on the first current collector 3011 may include a metal material. The metal material includes aluminum, an aluminum alloy, nickel, a nickel alloy, titanium, a titanium alloy, silver, a silver alloy, or the like. The first active material layer 3012 may be a structural layer including a polarity active material.

In some examples, the first electrode plate 301 may be an anode electrode plate. The second electrode plate 302 may be a cathode electrode plate. The first active material layer 3012 includes an anode active material. The anode active material may be an anode active material for a battery cell 7 known in the art. As an example, the anode active material may comprise at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as an anode active material of a battery 2 may also be used. These anode active materials may be used alone or in combination of two or more thereof.

A first active material layer 3012 may be formed by coating an anode active material on a surface of a first current collector 3011 through a coating process.

The first end face 30111 may be a surface of an end portion of the first current collector 3011 in the winding direction X, and may be formed by cutting during the preparation of an electrode plate. For example, the first end face 30111 may intersect with a surface of a first current collector 3011 coated with a first active material.

A first insulator 303 may be a member having an insulating property. The first insulator 303 is connected on a first electrode plate 301 and the first insulator 303 covers at least a part of a first end face 30111, so that burrs of the first end face 30111 covered by the first insulator 303 are covered by the first insulator 303, thereby reducing the possibility that the burrs pierce a separator 305 and reducing the risk of short circuiting of a battery cell 7.

For example, the first insulator 303 may be an insulating structure having an opening. An end portion of the first current collector 3011 having a first end face 30111 is inserted into the opening to cover the first end face 30111. The first insulator 303 may also be formed by curing an insulating adhesive. The insulating adhesive is adhered to the first end face 30111 to cover the first end face 30111. The first insulator 303 may also be formed by adhering the insulating tape to an end portion of the first current collector 3011 having the first end face 30111 and covering the first end face 30111.

In the above structure, since the first end face 30111 of the end portion of the first current collector 3011 is covered with the first insulator 303, the first insulator 303 can cover burrs at the first end face 30111. Thus, the risk of burrs piercing the separator 305 of the electrode assembly 30 is reduced, the possibility of short circuiting occurring inside of the battery 2 is reduced, and improvement to the reliability of the battery 2 is facilitated.

In some embodiments, both ends of the first electrode plate 301 in the winding direction X are provided with the first insulator 303.

Both ends of the first electrode plate 301 in the winding direction X are provided with the first insulator 303, so that the first end faces 30111 of both ends of the first electrode plate 301 in the winding direction X are at least partially covered by the first insulator 303. Thus, the burrs on the first end faces 30111 of both ends of the first electrode plate 301 can be covered, which can further reduce the risk of burrs piercing the separator 305 of the electrode assembly 30, and facilitates to further improve reliability of the battery 2.

In some embodiments, the first insulator 303 is bonded to the first active material layer 3012 or the first current collector 3011.

The first insulator 303 is bonded to the first active material layer 3012 or the first current collector 3011 of the first electrode plate 301, so that the first insulator 303 is firmly connected to the first electrode plate 301 and is not easy to fall off. For example, the first insulator 303 may be bonded to the first active material layer 3012 or the first current collector 3011 through a bonding substance such as a glue.

In some embodiments, the first insulator 303 is bonded to the first active material layer 3012. The first insulator 303 is bonded to a surface of the first active material layer 3012, so that the first insulator 303 has a larger bonding area with the first electrode plate 301, thereby facilitating improvement of connection firmness for the first insulator 303 on the first electrode plate 301.

In some embodiments, the first insulator 303 includes two first insulating layers 3031 arranged opposite to each other. The first insulating layer 3031 includes a first connecting portion 30311 and a first covering portion 30312. The first covering portion 30312 is stacked on the first electrode plate 301. The first connecting portions 30311 of the two first insulating layers 3031 are bonded to each other.

The first insulating layer 3031 may be a partial structure constituting the first insulator 303. The two first insulating layers 3031 are arranged opposite to each other and respectively connected to two surfaces of an end portion of the first electrode plate 301 that are arranged opposite to each other, so as to cover the first end face 30111.

As shown in FIG. 7, a first insulating layer 3031 includes a first connecting portion 30311 and a first covering portion 30312 connected to each other. The first connecting portion 30311 and the first covering portion 30312 are sequentially arranged in a winding direction X. The first covering portion 30312 is configured to be connected to a first electrode plate 301. The first connecting portion 30311 is configured to be connected to a first connecting portion 30311 of another first insulating layer 3031 to cover an end portion of a first electrode plate 301 where a first end face 30111 is located.

First covering portions 30312 of two first insulators 303 are respectively stacked on two sides of a first electrode plate 301 by being adhered to two opposite surfaces of the first electrode plate 301. First connecting portions 30311 of two first insulating layers 3031 are adhered to each other to cover a first end face 30111 connected between the two opposite surfaces of the first electrode plate 301.

For example, the first insulating layer 3031 may be an insulating tape. A part of the insulating tape is adhered to a surface of the first electrode plate 301. The other part of the insulating adhesive is oppositely adhered to and attached to another insulating tape.

In some embodiments, a thickness of the first electrode plate 301 is H1, and a thickness of the first insulating layer 3031 is H2, where $H 2 \leq \frac{1}{2} H 1$.

The thickness of the first electrode plate 301 is H1, and the thickness of the first insulating layer 3031 is H2, where $H 2 \leq \frac{1}{2} H 1$, so that a thickness of first connecting portions 30311 in two first insulating layers 3031 after bonding is less than or equal to the thickness of the first electrode plate 301, facilitating reduction in occurrence of steps in the electrode assembly 30 formed by winding, and reducing the possibility of cracks occurring in the first electrode plate 301 due to step stress.

In some embodiments, an inner end of the first electrode plate 301 is connected to the first insulator 303, and at least a part of the first electrode plate 301 is wound on an outer side of the first insulator 303.

By connecting the first insulator 303 to the inner end of the first electrode plate 301 and winding at least a part of the first electrode plate 301 around the outer side of the first insulator 303, the first insulator 303 at the inner end of the first electrode plate 301 can be wound around a center of the electrode assembly 30, so that the first insulator 303 can produce a support effect for the electrode assembly 30, facilitating reduction in possibility of collapse of the electrode assembly 30.

In some embodiments, in a direction opposite to the winding direction X, a length of the first insulator 303 at the inner end of the first electrode plate 301 extending beyond the first electrode plate 301 is A1, where 0.5 mm≤A1≤120 mm.

A length A1 of the first insulator 303 at the inner end of the first electrode plate 301 extending beyond the first electrode plate 301 is a length of the first connecting portion 30311 in the direction opposite to the winding direction X. The length A1 of the first insulator 303 connected to the inner end of the first electrode plate 301 extending beyond the first electrode plate 301 in the direction opposite to the winding direction X is set in a range of 0.5 mm≤A1≤120 mm, so that the first insulator 303 connected to the inner end of the first electrode plate 301 can form a winding core with good supporting ability, which can better support the center of the electrode assembly 30. Thus, the first insulator 303 connected to the inner end of the first electrode plate 301 can better prevent collapse of the electrode assembly 30.

In some embodiments, where 1 mm≤A1≤100 mm, the first insulator 303 connected to the inner end of the first electrode plate 301 can not only well support the center of the electrode assembly 30, but also reduce an amount of the first insulator 303 and waste.

In some embodiments, as shown in FIG. 8, a second electrode plate 302 includes a second current collector 3021 and a second active material layer 3022 arranged on a surface of a second current collector 3021. An end portion of the second current collector 3021 in a winding direction X has a second end face 30211. An electrode assembly 30 further includes a second insulator 304. The second insulator 304 is connected to the second electrode plate 302 and covers at least a part of the second end face 30211.

The second electrode plate 302 is a cathode electrode plate. The second current collector 3021 included in the second electrode plate 302 may be a structure having conductivity, and may be formed by arranging a conductive material on an insulating substrate. For example, the conductive material on the second current collector 3021 may include a metal material. The metal material includes aluminum, an aluminum alloy, nickel, a nickel alloy, titanium, a titanium alloy, silver, a silver alloy, or the like.

The second active material layer 3022 may be a structural layer containing a cathode active material. The cathode active material may include at least one of the following materials: a lithium-containing phosphate, a lithium transition metal oxide, and respective modified compounds thereof. However, the present application is not limited to these materials, and another conventional material that can be used as a cathode active material of a battery 2 may also be used. These cathode active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.80}Co_{0.15}Al_{0.05}O₂), modified compounds thereof, and the like.

The second end face 30211 may be a surface of an end portion of the second current collector 3021 in the winding direction X, and may be formed by cutting during the preparation of an electrode plate. For example, the second end face 30211 may intersect with a surface of a second current collector 3021 coated with the second active material.

The second insulator 304 may be a member having an insulating property. The second insulator 304 is connected on the second electrode plate 302 and the second insulator 304 covers at least a part of the second end face 30211, so that the burrs of the part of the second end face 30211 covered by the second insulator 304 is covered by the second insulator 304, thereby reducing the possibility of the burrs piercing a separator 305 and reducing a risk of short circuiting of a battery cell 7.

For example, the second insulator 304 may be an insulating structure having an opening. An end portion of the second current collector 3021 having a second end face 30211 is inserted into the opening to cover the second end face 30211. The second insulator 304 may also be formed by curing an insulating adhesive. The insulating adhesive is adhered to the second end face 30211 to cover the second end face 30211. The second insulator 304 may also be formed by adhering an insulating tape to an end portion of the second current collector 3021 having the second end face 30211 and covering the second end face 30211.

A separator 305 for separating a first electrode plate 301 and a second electrode plate 302 arranged in a stacked manner is provided between the first electrode plate 301 and the second electrode plate 302, and is stacked between a first electrode plate 301 and a second electrode plate 302 that are adjacent. For example, the separator 305 may be a separator. A separator in embodiments of the present application may be any well-known porous structure separator with good chemical stability and mechanical stability.

As an example, the main material of the separator may be selected from at least one of glass fiber, non-woven fabric, polyethylene, polypropylene, polyvinylidene fluoride, and ceramics. The separator may be a single-layer film or a multilayer composite film. When the separator is a multilayer composite film, the materials of respective layers may be the same or different. The separator 305 may be a separate component positioned between a first electrode plate 301 and a second electrode plate 302, or it may be attached to surfaces of the first electrode plate 301 and the second electrode plate 302.

In some implementations, the separator 305 may further be a solid electrolyte. The solid electrolyte is positioned between the first electrode plate 301 and the second electrode plate 302, serving to transmit ions and isolate the first electrode plate 301 from the second electrode plate 302.

In some embodiments, an elastic modulus of the first insulator 303 is greater than an elastic modulus of the first electrode plate 301. An elastic modulus of the second insulator 304 is greater than an elastic modulus of the second electrode plate 302.

By configuring the elastic modulus of the first insulator 303 to be greater than the elastic modulus of the first electrode plate 301 and configuring the elastic modulus of the second insulator 304 to be greater than the elastic modulus of the second electrode plate 302, the first insulator 303 connected to the inner end of the first electrode plate 301 can better support the center of the electrode assembly 30, and the second insulator 304 connected to the inner end of the second electrode plate 302 can better support the center of the electrode assembly 30, facilitating reduction in possibility of collapse of an electrode assembly 30.

For example, the elastic modulus of the first insulator 303 and the second insulator 304 may be Young's modulus, which may be obtained by measurement according to the national standard GB/T 1447-2005. A specific measurement method may be performed with reference to the national standard GB/T 1447-2005, and details are not described herein again.

In some embodiments, the first electrode plate 301 is an anode electrode plate. The second electrode plate 302 is a cathode electrode plate. The first insulator 303 extends beyond the second insulator 304 in a direction opposite to a winding direction X.

In an electrode assembly 30 in a cylindrical winding structure, an anode electrode plate usually protrudes from a cathode electrode plate in a winding direction X. By configuring the first electrode plate 301 as the anode electrode plate, configuring the second electrode plate 302 as the cathode electrode plate, and making the first insulator 303 to extend beyond the second insulator 304 in the direction opposite to the winding direction X, the first insulator 303 connected to the anode electrode plate can be longer than the second insulator 304 at the center of the electrode assembly 30 and can be wound into the center of the electrode assembly 30.

In some embodiments, in a thickness direction of a first electrode plate 301, a thickness of a first insulator 303 is H3, and a thickness of a second insulator 304 is F3, where H3>F3.

By configuring the thickness H3 of the first insulator 303 to be greater than the thickness of the second insulator F3 in the thickness direction of the first electrode plate 301, the first insulator 303 wound around the inner end of the first electrode plate 301 at the center of the electrode assembly 30 can provide a greater supporting force, facilitating improvement to the effect of reducing collapse.

In some embodiments, in the direction opposite to the winding direction X, the first insulator 303 is located on an inner side of the second insulator 304.

By arranging the first insulator 303 on the inner side of the second insulator 304 in the direction opposite to the winding direction X, the first insulator 303 is entirely located on the inner side of the second insulator 304, so that not only the anode electrode plate can extend beyond the cathode electrode plate in the winding direction X, but also the first insulator 303 connected to the inner end of the first electrode plate 301 can be better wound around the center of the electrode assembly 30 and can better produce a support effect.

In some embodiments, an elastic modulus of the first insulator 303 is greater than an elastic modulus of the second insulator 304.

By configuring the elastic modulus of the first insulator 303 to be greater than the elastic modulus of the second insulator 304, the first insulator 303 connected to the inner end of the first electrode plate 301 can provide a greater elastic restoring force to perform support at the center of the electrode assembly 30 after being wound, so that the first insulator 303 can better reduce the possibility of collapse of the electrode assembly 30.

In some embodiments, both ends of the second electrode plate 302 in the winding direction X are provided with the second insulator 304.

By providing the second insulator 304 at both ends of the second electrode plate 302 in the winding direction X, second end faces 30211 of both ends of the second electrode plate 302 in the winding direction X are at least partially covered by the second insulator 304, so that burrs on the second end faces 30211 of both ends of the second electrode plate 302 can be covered, which can further reduce the risk of burrs piercing a separator 305 of an electrode assembly 30, and facilitate further improvement of reliability of the battery 2.

In some embodiments, a length of the second insulator 304 at the inner end of the second electrode plate 302 extending beyond the second electrode plate 302 is B1, and a length of the second insulator 304 at the outer end of the second electrode plate 302 extending beyond the second electrode plate 302 is B4, where B1>B4.

The length of the second insulator 304 at the inner end of the second electrode plate 302 extending beyond the second electrode plate 302 is set to B1 and the length of the second insulator 304 at the outer end of the second electrode plate 302 extending beyond the second electrode plate 302 is set to B4, where B1>B4, the second insulator 304 can have a good support effect while reducing waste.

In some embodiments, the second insulator 304 includes two second insulating layers 3041 arranged opposite to each other. The second insulating layer 3041 includes a second connecting portion 30411 and a second covering portion 30412. The second covering portion 30412 is stacked on the second electrode plate 302. The second connecting portions 30411 of the two second insulating layers 3041 are bonded to each other.

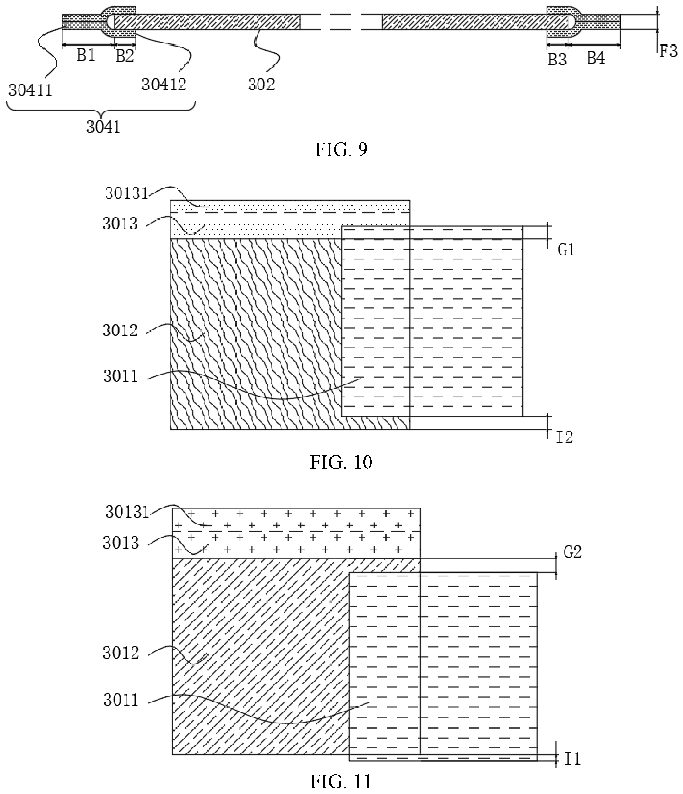

As shown in FIG. 9, a second insulating layer 3041 includes a second connecting portion 30411 and a second covering portion 30412 connected to each other. The second connecting portion 30411 and the second covering portion 30412 are sequentially arranged in a winding direction X. The second covering portion 30412 is configured to be connected to a second electrode plate 302. The first connecting portion 30411 is configured to be connected to a second connecting portion 30411 of another second insulating layer 3041 to cover an end portion of a second electrode plate 302 where a second end face 30211 is located.

Second covering portions 30412 of two second insulators 304 are respectively stacked on two sides of a second electrode plate 302 by being adhered to two opposite surfaces of the second electrode plate 302. Second connecting portions 30411 of two second insulating layers 3041 are adhered to each other to cover a second end face 30211 connected between the two opposite surfaces of the second electrode plate 302.

A length B1 of the second insulator 304 at the inner end of the second electrode plate 302 extending beyond the second electrode plate 302 is a length of the second connecting portion 30411 at the inner end of the second electrode plate 302 in a direction opposite to the winding direction X. A length B4 of the second insulator 304 at the outer end of the second electrode plate 302 extending beyond the second electrode plate 302 is a length of the second connecting portion 30411 at the outer end of the second electrode plate 302 in the winding direction X.

In some embodiments, the length B1 of the second insulator 304 at the inner end of the second electrode plate 302 extending beyond the second electrode plate 302 (a length of the second connecting portion 30411 at the inner end of the second electrode plate 302 in the direction opposite to the winding direction X) is configured in a range of 0.5 mm≤B1≤120 mm. By configuring the length B1 of the second insulator 304 at the inner end of the second electrode plate 302 extending beyond the second electrode plate 302 in a range of 0.5 mm≤B1≤120 mm, the second insulator 304 at the inner end of the second electrode plate 302 can extend into a center of the electrode assembly 30 by a sufficient length, facilitating improvement to a support effect thereof on an electrode assembly 30 without waste caused by a too long length. In some embodiments, the length B1 of the second insulator 304 at the inner end of the second electrode plate 302 extending beyond the second electrode plate 302 is configured in a range of 1 mm≤B1≤100 mm, so that the second insulator 304 at the inner end of the second electrode plate 302 better supports the electrode assembly 30 without waste caused by a too long length.

In some embodiments, the length B4 of the second insulator 304 at the outer end of the second electrode plate 302 extending beyond the second electrode plate 302 (a length of the second connecting portion 30411 at the outer end of the second electrode plate 302 in the winding direction X) is configured in a range of 0.5 mm≤B4≤10 mm. By configuring the length B4 of the second insulator 304 at the outer end of the second electrode plate 302 extending beyond the second electrode plate 302 to be 0.5 mm ≤B4≤10 mm, the second insulator 304 at the outer end of the second electrode plate 302 can cover the second end face 30211 at the outer end of the second electrode plate 302, and waste of the second insulator 304 can be reduced. In some embodiments, the length B4 of the second insulator 304 at the outer end of the second electrode plate 302 extending beyond the second electrode plate 302 is configured in a range of 1 mm≤B4≤6 mm, so that the second insulator 304 at the outer end of the second electrode plate 302 can cover the second end face 30211 at the outer end of the second electrode plate 302 and waste of the second insulator 304 can be reduced.

For example, the second insulating layer 3041 may be an insulating tape. Two parts of the insulating tape are adhered to a surface of the second electrode plate 302. The other part of the insulating adhesive is oppositely adhered to and attached to another insulating tape.

In some embodiments, in the winding direction X, a length of the first covering portion 30312 at the inner end of the first electrode plate 301 is A2. A length of the second covering portion 30412 at the inner end of the second electrode plate 302 is B2, where B2<A2.

The length A2 of the first covering portion 30312 at the inner end of the first electrode plate 301 is a length of a portion of the first insulator 303 at the inner end of the first electrode plate 301 covering the first electrode plate 301 in the winding direction X. The length B2 of the second covering portion 30412 at the inner end of the second electrode plate 302 is a length of a portion of the second insulator 304 at the inner end of the second electrode plate 302 covering the second electrode plate 302 in the winding direction X. By making B2<A2, an area of the second electrode plate 302 covered by the second insulator 304 at the inner end of the second electrode plate 302 can be reduced, facilitating reduction in a capacity loss caused by arranging the second insulator 304.

For example, the length A2 of the first covering portion 30312 at the inner end of the first electrode plate 301 is configured in a range of 0.5 mm≤A2≤120 mm. By configuring the length A2 of the first covering portion 30312 at the inner end of the first electrode plate 301 in a range of 0.5 mm≤A2≤120 mm, the first insulator 303 at the inner end of the first electrode plate 301 and the first electrode plate 301 have a sufficient bonding area, and the first electrode plate 301 is not easily wasted due to an excessive bonding area, so that the first insulator 303 can be firmly bonded to the first electrode plate 301 through the first covering portion 30312 without wasting a functional area of the first electrode plate 301. In some embodiments, the length A2 of the first covering portion 30312 at the inner end of the first electrode plate 301 is configured in a range of 1 mm≤A2≤100 mm, so that the first insulator 303 is firmly bonded to the first electrode plate 301 without wasting an area of the first electrode plate 301.

The length B2 of the second covering portion 30412 at the inner end of the second electrode plate 302 is configured in a range of 0.5 mm≤B2≤10 mm. By configuring the length B2 of the second covering portion 30412 at the inner end of the second electrode plate 302 in the range of 0.5 mm≤B2≤10 mm, the second insulator 304 at the inner end of the second electrode plate 302 and the second electrode plate 302 have a sufficient bonding area, and the second electrode plate 302 can be less covered, so that the second insulator 304 can be firmly bonded to the second electrode plate 302 through the second covering portion 30412 without excessively covering the second electrode plate 302. In some embodiments, the length B2 of the second covering portion 30412 at the inner end of the second electrode plate 302 is configured in a range of 1 mm≤B2≤6 mm, so that the second insulator 304 is firmly bonded to the second electrode plate 302 without wasting an area of the second electrode plate 302.

For example, a length A3 of the first covering portion 30312 at the outer end of the first electrode plate 301 is configured in a range of 0.5 mm≤A3≤120 mm. By configuring the length A3 of the first covering portion 30312 at the outer end of the first electrode plate 301 in a range of 0.5 mm≤A3≤120 mm, the first insulator 303 at the outer end of the first electrode plate 301 and the first electrode plate 301 have a sufficient bonding area, and the first electrode plate 301 is less wasted due to an excessive bonding area, so that the first insulator 303 can be firmly bonded to the first electrode plate 301 through the first covering portion 30312 without wasting a functional area of the first electrode plate 301. In some embodiments, the length A3 of the first covering portion 30312 at the outer end of the first electrode plate 301 is configured in a range of 1 mm≤A3≤100 mm, so that the first insulator 303 is firmly bonded to the first electrode plate 301 without wasting the area of the first electrode plate 301.

For example, a length A4 of the first connecting portion 30311 at the outer end of the first electrode plate 301 is configured in a range of 0.5 mm≤A4≤120 mm. By configuring the length A4 of the first connecting portion 30311 at the outer end of the first electrode plate 301 in a range of 0.5 mm≤A4≤120 mm, the first connecting portion 30311 at the outer end of the first electrode plate 301 can cover the first end face 30111 at the outer end of the first electrode plate 301, and waste of the first insulator 303 can be reduced. In some embodiments, the length A4 of the first connecting portion 30311 at the outer end of the first electrode plate 301 is configured in a range of 1 mm≤A4≤100 mm, so that the first connecting portion 30311 at the outer end of the first electrode plate 301 can cover the first end face 30111 at the outer end of the first electrode plate 301 and can reduce the waste of the first insulator 303.

In some embodiments, the electrode assembly 30 is a cylindrical structure.

The cylindrical structure formed by a configuration of the electrode assembly 30 may be formed by stacking a first electrode plate 301, a second electrode plate 302, and a separator 305 in the electrode assembly 30 and then winding them in a winding direction X.

In some embodiments, the first electrode plate 301 further includes a first tab 3013 connected to the first current collector 3011. The first tab 3013 includes a flattened region 30131. The flattened region 30131 is spaced apart from the first insulator 303.

The first tab 3013 may be a portion of the first current collector 3011 on which the first active material layer 3012 is not arranged, and which may be configured to be connected to other components in a battery cell 7.

The first tab 3013 is subjected to flattening treatment to obtain the flattened region 30131, so that an end portion of an electrode assembly 30 in a direction perpendicular to a winding direction X is flat, thereby reducing a possibility of occurrence of sharp corner structures, facilitating subsequent welding of a current collecting disk at the end portion of the electrode assembly 30 in the direction perpendicular to the winding direction X, and ensuring welding quality.

The flattened region 30131 and the first insulator 303 being spaced apart may mean that the flattened region 30131 of the first tab 3013 is not provided with the first insulator 303, so that the flattened region 30131 and the first insulator 303 are in a separated state, and the first insulator 303 does not affect connection between the flattened region 30131 and the current collecting disc.

In some embodiments, as shown in FIG. 10, in a direction perpendicular to a winding direction X, a first insulator 303 may be extended from a side of a first electrode plate 301 provided with a first tab 3013 to a surface of a first tab 3013 through a first active material layer 3012, so that the first insulator 303 can cover a larger area of a first end face 30111, facilitating to cover more burrs on the first end face 30111, and to further reduce a risk of burrs piercing a separator 305 of an electrode assembly 30.

For example, in the direction perpendicular to the winding direction X, a length of the first insulator 303 extending beyond the first active material layer 3012 is G1, where G1≤4 mm, so that a first insulator 303 can better avoid a flattened region 30131 of a first tab 3013.

As shown in FIG. 11, a first insulator 303 may not be extended from a side of a first electrode plate 301 provided with a first tab 3013, so that the first insulator 303 can better avoid a flattened region 30131 of the first tab 3013 and is not easy to affect and change a structure of the first tab 3013. In some embodiments, a length between a first insulator 303 and an edge of a first active material layer 3012 is G2, where G2≤4 mm, so that a first insulator 303 can cover a larger area of a first end face 30111, facilitating to cover more burrs on the first end face 30111, and to further reduce a risk of burrs piercing a separator 305 of an electrode assembly 30.

In some embodiments, in a direction perpendicular to a winding direction X, a first insulator 303 may be extended beyond a first active material layer 3012 from a side of a first electrode plate 301 away from a first tab 3013, so that a first insulator 303 can better cover a first end face 30111, facilitating to cover more burrs on the first end face 30111, and to further reduce a risk of burrs piercing a separator 305 of an electrode assembly 30. For example, the first insulator 303 is extended beyond the first active material layer 3012 from the side of the first electrode plate 301 away from the first tab 3013 by I1, where I1≤4 mm, facilitating reduction in an amount of the first insulator 303 and reducing waste of materials.

For example, in the direction perpendicular to the winding direction X, a first insulator 303 may be also not extended from the side of the first electrode plate 301 away from the first tab 3013, and the length between the first insulator 303 and the edge of the first active material layer 3012 is I, where I≤4 mm, so that the first insulator 303 can cover a larger area of the first end face 30111, facilitating to cover more burrs on the first end face 30111, and to further reduce the risk of burrs piercing the separator 305 of the electrode assembly 30.

Some embodiments of this application further provide a battery cell 7. The battery cell 7 includes a housing 20 and an electrode assembly 30 provided by at least one foregoing technical solution. The battery cell 30 is accommodated in the housing 20. Since the battery cell 7 includes the electrode assembly 30 provided in the foregoing technical solution, the battery cell 7 has good reliability.

Some embodiments of this application further provide a battery 2. The battery 2 includes the battery cell 7 provided by the foregoing technical solutions. Since the battery 2 includes the battery cell 7 provided by the foregoing technical solutions, the battery 2 has good reliability.

Some embodiments of this application further provide an electrical device. The electrical device includes the battery 2 provided by the foregoing technical solutions. The battery 2 is used to provide electric energy. The electrical device may be any one of the above devices or systems using the battery 2.

Some embodiments of the present application further provide a method for manufacturing an electrode assembly 30. The method for manufacturing an electrode assembly 30 includes the following steps:
S1. providing a plurality of first electrode plates 301 and an insulator, where the first electrode plate 301 includes a first current collector 3011 and a first active material layer 3012 arranged on a surface of the first current collector 3011, and an end portion of the first current collector 3011 in a length direction thereof is provided with a first end face 30111.

The provided first electrode plate 301 may be the first electrode plate 301 in the foregoing technical solutions, and includes a first current collector 3011 and a first active material layer 3012 arranged on a surface of the first current collector 3011. Each first electrode plate 301 is configured to form an electrode assembly 30. An end portion of the first current collector 3011 in the first electrode plate 301 in its length direction has a first end face 30111. The insulator may be an insulating structure for connecting two first electrode plates 301.

Step S1 can provide a material for manufacturing an electrode assembly 30, facilitating subsequent processing to manufacture the electrode assembly 30.

S2. Connect two adjacent first electrode plates 301 through an insulator, where the insulator covers at least a part of a first end face 30111.

Through step S2, a plurality of first electrode plates 301 are sequentially connected in a length direction of a first electrode plate 301 to form a long strip-shaped structure. Two adjacent first electrode plates 301 are connected by an insulator. The insulator covers at least a part of a first end face 30111 of a first current collector 3011, so that the insulator covers at least a part of burrs of the first end face 30111, thereby reducing the possibility that the burrs puncture a separator 305 after the electrode assembly 30 is formed by winding.

S3. Wind the first electrode plate 301 and the insulator in a length direction of a first current collector 3011.

Through step S2, a long strip-shaped structure including a plurality of first electrode plates 301 and an insulator is wound to form a cylindrical wound structure.

S4. Cut an insulator between two adjacent first electrode plates 301, to enable two ends of the first electrode plate 301 in a winding direction X to form a first insulator 303, where the first insulator 303 covers at least part of a first end face 30111.

Through the above step S4, after a first electrode plate 301 is wound to form a wound structure, an insulator between the first electrode plate 301 and an adjacent first electrode plate 301 is cut off in the middle, so that the insulator is divided into a first insulators 303 connected to both ends of the adjacent two first electrode plates 301 in a winding direction X, and the first insulator 303 covers at least part of the first end face 30111.

According to some embodiments of this application, an embodiment of this application provides an electrode assembly 30. The electrode assembly 30 includes a first electrode plate 301, a second electrode plate 302, a separator 305, a first insulator 303, and a second insulator 304. The first electrode plate 301, the second electrode plate 302, and the separator 305 are stacked. The separator 305 is arranged between the first electrode plate 301 and the second electrode plate 302. The first electrode plate 301 includes a first current collector 3011 and a first active material layer 3012 arranged on a surface of the first current collector 3011. An end portion of the first current collector 3011 in a winding direction X has a first end face 30111. The first insulator 303 is connected to the first electrode plate 301 and covers at least a part of the first end face 30111. The second electrode plate 302 includes a second current collector 3021 and a second active material layer 3022 arranged on a surface of the second current collector 3021. An end portion of the second current collector 3021 in a winding direction X has a second end face 30211. The second insulator 304 is connected to the second electrode plate 302 and covers at least a part of the second end face 30211. An inner end of the first electrode plate 301 is connected to the first insulator 303. At least a part of the first electrode plate 301 is wound on an outer side of the first insulator 303. In the above structure, since the first end face 30111 of the end portion of the first current collector 3011 is covered with the first insulator 303, and the first insulator 303 can cover burrs at the first end face 30111, reducing a risk of the burrs piercing a separator 305 of an electrode assembly 30, reducing possibility of short circuiting inside a battery 2, and facilitating improvement of reliability of the battery 2.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. An electrode assembly, comprising a first electrode plate and a second electrode plate that have opposite polarities, wherein the first electrode plate and the second electrode plate are wound in a winding direction;
the first electrode plate comprises a first current collector and a first active material layer arranged on a surface of the first current collector, and an end portion of the first current collector in the winding direction is provided with a first end face; and
the electrode assembly further comprises a first insulator, and the first insulator is connected to the first electrode plate and covers at least part of the first end face.

2. The electrode assembly according to claim 1, wherein both ends of the first electrode plate in the winding direction are provided with the first insulator.

3. The electrode assembly according to any one of claims 1 and 2, wherein the first insulator is bonded to the first active material layer or the first current collector.

4. The electrode assembly according to any one of claims 1 to 3, wherein the first insulator comprises two first insulating layers arranged opposite to each other, the first insulating layer comprises a first connecting portion and a first covering portion, the first covering portion is stacked on the first electrode plate, and the first connecting portions of the two first insulating layers are bonded to each other.

5. The electrode assembly according to claim 4, wherein a thickness of the first electrode plate is H1, and a thickness of the first insulating layer is H2, where $H 2 \leq \frac{1}{2} H 1$.

6. The electrode assembly according to any one of claims 1 to 5, wherein an inner end of the first electrode plate is connected to the first insulator, and at least a part of the first electrode plate is wound on an outer side of the first insulator.

7. The electrode assembly according to claim 6, wherein in a direction opposite to the winding direction, a length of the first insulator at the inner end of the first electrode plate extending beyond the first electrode plate is A1, where 0.5 mm≤A1≤120 mm.

8. The electrode assembly according to any one of claims 1 to 7, wherein the second electrode plate comprises a second current collector and a second active material layer arranged on a surface of the second current collector, and an end portion of the second current collector in the winding direction has a second end face; and the electrode assembly further comprises a second insulator, and the second insulator is connected to the second electrode plate and covers at least a part of the second end face.

9. The electrode assembly according to claim 8, wherein an elastic modulus of the first insulator is greater than an elastic modulus of the first electrode plate, and an elastic modulus of the second insulator is greater than an elastic modulus of the second electrode plate.

10. The electrode assembly according to claim 8, wherein the first electrode plate is an anode electrode plate, the second electrode plate is a cathode electrode plate, and the first insulator extends beyond the second insulator in a direction opposite to the winding direction.

11. The electrode assembly according to claim 10, wherein in a thickness direction of the first electrode plate, a thickness of the first insulator is H3, and a thickness of the second insulator is F3, where H3>F3.

12. The electrode assembly according to any one of claims 10 and 11, wherein the first insulator is located on an inner side of the second insulator in the direction opposite to the winding direction.

13. The electrode assembly according to claims 10 to 12, wherein an elastic modulus of the first insulator is greater than an elastic modulus of the second insulator.

14. The electrode assembly according to any one of claims 10 to 13, wherein both ends of the second electrode plate in the winding direction are provided with the second insulator.

15. The electrode assembly according to claim 14, wherein a length of the second insulator at an inner end of the second electrode plate extending beyond the second electrode plate is B1, a length of the second insulator at an outer end of the second electrode plate extending beyond the second electrode plate is B4, where B1>B4.

16. The electrode assembly according to any one of claims 1 to 15, wherein the electrode assembly is a cylindrical structure.

17. The electrode assembly according to any one of claims 1 to 16, wherein the first electrode plate further comprises a first tab connected to the first current collector, the first tab comprises a flattened region, and the flattened region is spaced apart from the first insulator.

18. A battery cell, comprising:
a housing;
at least one of the electrode assemblies according to any one of claims 1-17, the electrode assembly being accommodated in a housing.

19. A battery, comprising the battery cell according to claim 18.

20. An electrical device, comprising the battery according to claim 19, wherein the battery is used for supplying electric energy.

21. A method for manufacturing an electrode assembly, comprising:
providing a plurality of first electrode plates and an insulator, wherein the first electrode plate comprises a first current collector and a first active material layer arranged on a surface of the first current collector, and an end portion of the first current collector in a length direction of the first current collector is provided with a first end face;
connecting two adjacent first electrode plates through the insulator, wherein the insulator covers at least a part of the first end face;
winding the first electrode plate and the insulator in the length direction of the first current collector; and
cutting the insulator between the two adjacent first electrode plates to enable two ends of the first electrode plate in a winding direction to form a first insulator, where the first insulator covers at least a part of the first end face.
